Europäisches Patentamt

European Patent Office

Office européen des brevets

(19)

(11) Veröffentlichungsnummer: **0 229 243**
**B1**

(12)

# EUROPÄISCHE PATENTSCHRIFT

(45) Veröffentlichungstag der Patentschrift:
21.02.90

(51) Int. Cl.⁴: **G01B 7/28**, G01B 7/34

(21) Anmeldenummer: **86114842.7**

(22) Anmeldetag: **25.10.86**

(54) **Einrichtung zur Messung der Gestalt einer Oberfläche entlang einer Abtastlinie.**

(30) Priorität: **12.12.85 DE 3543906**

(43) Veröffentlichungstag der Anmeldung:
**22.07.87 Patentblatt 87/30**

(45) Bekanntmachung des Hinweises auf die Patenterteilung:
**21.02.90 Patentblatt 90/8**

(84) Benannte Vertragsstaaten:
**CH FR GB IT LI SE**

(56) Entgegenhaltungen:
**DE-A- 2 611 476
DE-A- 2 725 072
DE-A- 3 152 731
US-A- 3 357 238**

(73) Patentinhaber: **Hommelwerke GmbH, Alte Tuttlinger Strasse 20, D-7730 VS-Schwenningen(DE)**

(72) Erfinder: **Schmidt, Jörg, Dipl.-Ing., Feldbergstrasse 17, D-7735 Dauchingen(DE)**

(74) Vertreter: **Leine, Sigurd, Dipl.-Ing. et al, LEINE & KÖNIG Patentanwälte Burckhardtstrasse 1, D-3000 Hannover 1(DE)**

ACTORUM AG

## Beschreibung

Die Erfindung betrifft eine Einrichtung der im Oberbegriff des Anspruchs 1 genannten Art zur Messung der Gestalt einer Oberfläche entlang einer Abtastlinie.

Einrichtungen der betreffenden Art sind allgemein bekannt. Sie haben den Nachteil, daß sich die Tastspitze bei Auslenkungen des Tastarmes, an dessen Ende sie sich befindet, in bezug zu dem Drehlager des Tastarmes nicht nur Bewegungen senkrecht zur Abtastinie ausführt, sondern auch Bewegungen in Richtung der Abtastlinie in bezug zu dem genannten Drehlager. Da ein üblicherweise verwendetes Registriergerät, z.B. ein Papierschreibgerät, mit konstanter Geschwindigkeit aufzeichnet, ergeben sich Fehler aufgrund der genannten Bewegungen der Tastspitze in bezug zu dem Drehlager des Tastarmes, die praktisch zu einem Vor- oder Nacheilen des Abtastpunktes in bezug zu einem konstanten Vorschub und damit zu Fehlern in der Wiedergabe der Gestalt der gemessenen Oberfläche führen. Diese Fehler sind zwar umso kleiner, je länger der Tastarm ist, jedoch kann der Tastarm aus Gründen der Stabilität, des Gewichts und der Schwingungsfestigkeit nicht beliebig lang gemacht werden.

Es sind mechanisch/elektrische Meßwandler bekannt, bei denen sich die Tastspitze an einem Meßstößel befindet, der in einer Parallelführung, z.B. einer Kugellagerführung, gehalten ist. Die Masse solcher Meßstößel ist jedoch verhältnismäßig groß, so daß sie sich nicht zur schnellen Abtastung und insbesondere nicht zur Abtastung der Feingestalt einer Oberfläche eignen.

Durch die DE-OS 31 52 731 ist eine Einrichtung zur Messung der Gestalt einer Oberfläche entlang einer Abtastlinie gemäß dem Oberbegriff des Anspruchs 1 bekannt, mit der die Aufgabe gelöst werden soll, durch Auslenkungsfehler des Tastarmes in Abtastrichtung hervorgerufene Meßfehler zu vermeiden. Dies gilt auch für die DE-PS 26 11 476. Bei der zuerst genannten Schrift ist das Drehgelenk des Tastarmes zur drehbaren Lagerung des Armes mit Bezug auf den Tastarmträger in einer Richtung beweglich gemacht, welches die Förderrichtung des Armträgers ist. Außerdem ist ein Verbindungsglied vorgesehen, dessen eines Ende durch den Arm drehbar gelagert ist und dessen anderes Ende von einem festen Gelenk auf dem Tastarmträger auf der einen Seite oder auf den entgegengesetzten Seiten der Drehfläche des Tastarmes drehbar getragen wird. Bei der als zweites genannten Schrift sind eine erste und eine dritte Stange mit je einem Ende schwenkbar mit einer Gleitplatte verbunden, welche den Abtastarm verschiebt. Eine zweite Stange ist schwenkbar mit den freien Enden der ersten und dritten Stange verbunden. Der Abtastarm ist an der zweiten Stange befestigt.

Bei beiden genannten Einrichtungen erfolgt also eine Kompensation der Kreisbogenbewegung der Tastspitze an dem Tastarm durch eine mechanische Kompensation, die aufwendig und insbesondere mit einem Gewicht behaftet ist, das die Trägheit des Abtastarmes erhöht und damit nur eine wesentlich niedrigere Abtastgeschwindigkeit zuläßt.

Der Erfindung liegt die Aufgabe zugrunde, eine Einrichtung der betreffenden Art zur Messung der Gestalt einer Oberfläche entlang einer Abtastlinie anzugeben, bei der durch Auslenkungsfehler des Tastarmes in Abtastrichtung hervorgerufene Meßfehler ohne Beeinträchtigung der Abtastgeschwindigkeit und ohne zusätzlichen mechanischen Aufwand weitgehend vermieden sind.

Die der Erfindung zugrundeliegende Aufgabe wird durch die im Anspruch 1 angegebene Lehre gelöst.

Die Erfindung beruht auf dem Grundgedanken, die bei Auslenkungen des Tastarmes in Richtung der Abtastlinie entstehenden Lagefehler der Tastspitze durch gegensinnige relative Vorschubänderungen zu kompensieren. Diese relative Vorschubänderung kann entweder in einem Vor- oder Nacheilen des Vorschubes oder der Zeitachse der Registriereinrichtung zu dem Vorschub der Vorschubeinrichtung für das Drehlager oder aber in einem Vor- oder Nacheilen des Vorschubes für das Drehlager relativ zu dem Vorschub oder der Zeitachse der Registriereinrichtung bestehen. Diese relative Vorschubänderung erfolgt erfindungsgemäß in Abhängigkeit von der von dem mechanisch/elektrischen Wandler abgegebenen elektrischen Meßspannung, die unmittelbar ein Maß für die Auslenkung des Tastarmes und damit auch für den Lagefehler ist. Die elektrische Meßspannung wird in eine Steuereinrichtung eingespeist, die auf die Vorschubeinrichtung oder die Zeitachse der Registriereinrichtung oder auch die Vorschubeinrichtung für das Drehlager einwirkt und das entsprechende, kompensierende, relative Vor- oder Nacheilen bewirkt.

Die Kompensation kann in unterschiedlicher Weise erfolgen. Eine Möglichkeit besteht gemäß der Lehre des Anspruchs 2 darin, daß die Steuereinrichtung zur Erzeugung des Vor- oder Nacheilens die Geschwindigkeit des Vorschubes der Registriereinrichtung oder der Vorschubeinrichtung für das Drehlager zeitweise erhöht bzw. verringert. Eine andere Möglichkeit besteht gemäß der Lehre des Anspruchs 3 darin, den jeweiligen Vorschub mit konstanter Geschwindigkeit laufen zu lassen und diesem konstanten Vorschub eine Kompensationsbewegung dadurch zu überlagern, daß der jeweilige Vorschubmotor in Vorschubrichtung hinund herbeweglich geführt und mit einer Verstelleinrichtung gekoppelt ist, die an die Steuereinrichtung angeschlossen ist und den Vorschubmotor zur Herbeiführung des Vor- und Nacheilens des Vorschubes hin- und herbewegt.

Handelt es sich bei der Registriereinrichtung um einen seriellen Digitalspeicher, so ist es lediglich erforderlich, die Zeitachse in der gleichen Weise wie die Wegachse bei dem Schreibgerät zu beeinflussen und damit die Fehler zu kompensieren.

Anhand der Zeichnung soll die Erfindung näher erläutert werden.

Fig. 1 verdeutlicht sehr schematisch die Funktionsweise einer Einrichtung zur Messung der Gestalt einer Oberfläche mit einem Tastarm,

Fig. 2 entspricht ungefähr Fig. 1 und dient zur Verdeutlichung der durch die Erfindung zu kompensierenden Meßfehler,

Fig. 3 verdeutlicht im einzelnen die Zusammenhänge beim Entstehen der durch die Erfindung zu kompensierenden Fehler,

Fig. 4 ist eine schematische und grafische Darstellung einer Aufzeichnung einer Oberflächengestalt ohne Fehler,

Fig. 5 entspricht Fig. 4, verdeutlicht jedoch den durch die Erfindung zu kompensierenden Fehler,

Fig. 6 entspricht Fig. 5, zeigt jedoch die aufgezeichnete Oberflächengestalt mit Kompensation, and

Fig. 7 zeigt ein schematisches Blockschaltbild eines Ausführungsbeispiels einer Einrichtung gemäß der Erfindung.

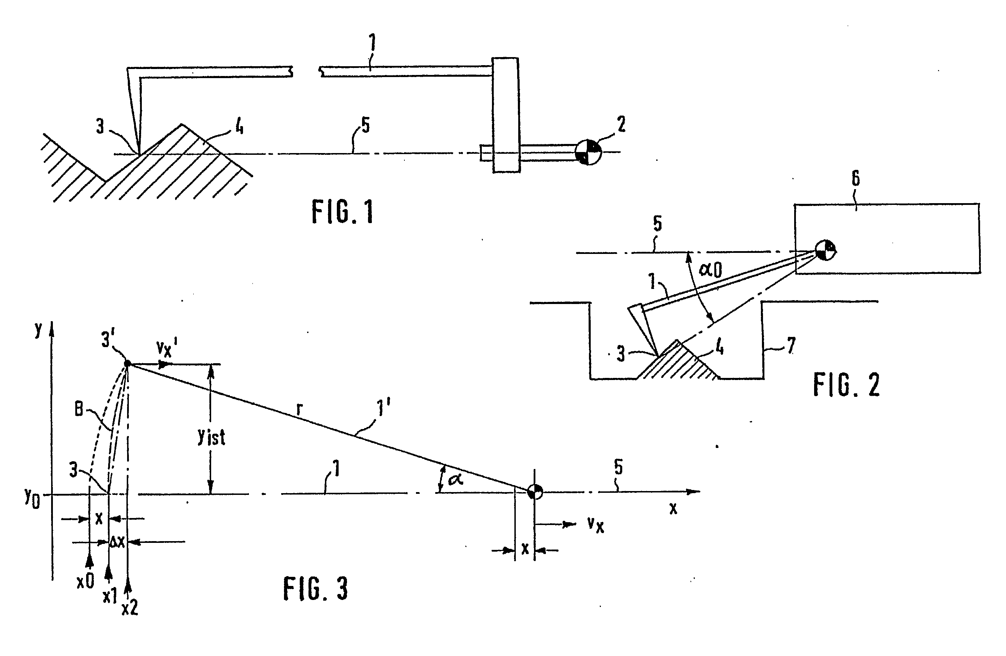

Fig. 1 zeigt einen Tastarm 1, der unterbrochen dargestellt ist und eine wesentlich größere Länge hat, als das Fig. 1 zeigt. Der Tastarm 1 ist an seinem einen Ende mittels eines Drehlagers 2 an einer nichtdargestellten Vorschubeinrichtung befestigt. An seinem freien Ende befindet sich eine Tastspitze 3, die auf einer zum Zwecke der nachfolgenden Erläuterung schematisch dachförmigen Oberflächenkontur 4 anliegt und sich bei Abtastung entlang einer Abtastlinie 5 bewegt. Sind die Auslenkungen der Tastspitze 3 sehr klein, so ergeben sich keine Meßfehler. Bei größeren Auslenkungen der Tastspitze 3 macht sich bemerkbar, daß sich diese auf einem Bogen um das Drehlager 2 bewegt. Dadurch entstehen die durch die Erfindung zu kompensierenden Fehler.

Fig. 2 entspricht weitgehend Fig. 1. Zusätzlich ist eine Vorschubeinrichtung 7 gezeigt, an der sich das Drehlager 2 befindet. Außerdem ist die dachförmige Oberflächenkontur aufgrund einer schematisch als Rechteck gezeigten Störung 7 weit von der mittleren Abtastlinie 5 entfernt, so daß der Tastarm 1 eine Auslenkung um einen Winkel α aus seiner Mittellage erfährt. Bei solchen großen Auslenkungen ist der zu kompensierende Fehler besonders groß.

Fig. 3 verdeutlicht die Auslenkung des Tastarmes 1 um einen Winkel α nach oben in eine Lage 1', wobei sich die Tastspitze 3 von einer Lage auf der Abtastlinie 5 in eine Lage 3' bewegt. Alle Teile sind in ein Koordinatensystem mit den Achsen y und x eingeordnet.

In der Zeichnung bedeuten:
r = Abstand Tastspitze 3 - Drehlager 2
B = Bogenlänge zwischen den Lagen 3 und 3' der Tastspitze (die vom Spulensystem gewonnene Spannung ist proportional B)
$y_{ist}$= tatsächliche Profilhöhe
α = Augenblickswinkel des Tastarmes
$v_x$ = Vorschubgeschwindigkeit des Drehlagers 2
$v_{x'}$ = tatsächliche Geschwindigkeit der Tastspitze 3
x = zurückgelegter Weg des Drehlagers
x + Δx = zurückgelegter Weg der Tastspitze aufgrund der Auslenkung in y-Richtung
x0 = Ausgangs-x-Lage der Tastspitze
x1 = Soll-x-Lage der Tastspitze nach Weg x
x2 = Ist-x-Lage der Tastspitze nach Weg x

Es ist zu erkennen, daß die Sekante zwischen den Orten derTastspitzen 3 und 3' aufgrund der relativen Größe von r nur sehr wenig verschieden von der Bogenlänge B ist, so daß sich die von dem zugehörigen mechanisch/elektrischen Wandler, der an den Tastarm 1 angeschlossen ist, abgegebene elektrischen Meßspannung nur einen sehr geringen Meßfehler in bezug auf die y-Richtung quer zur Abtastlinie 5 hat.

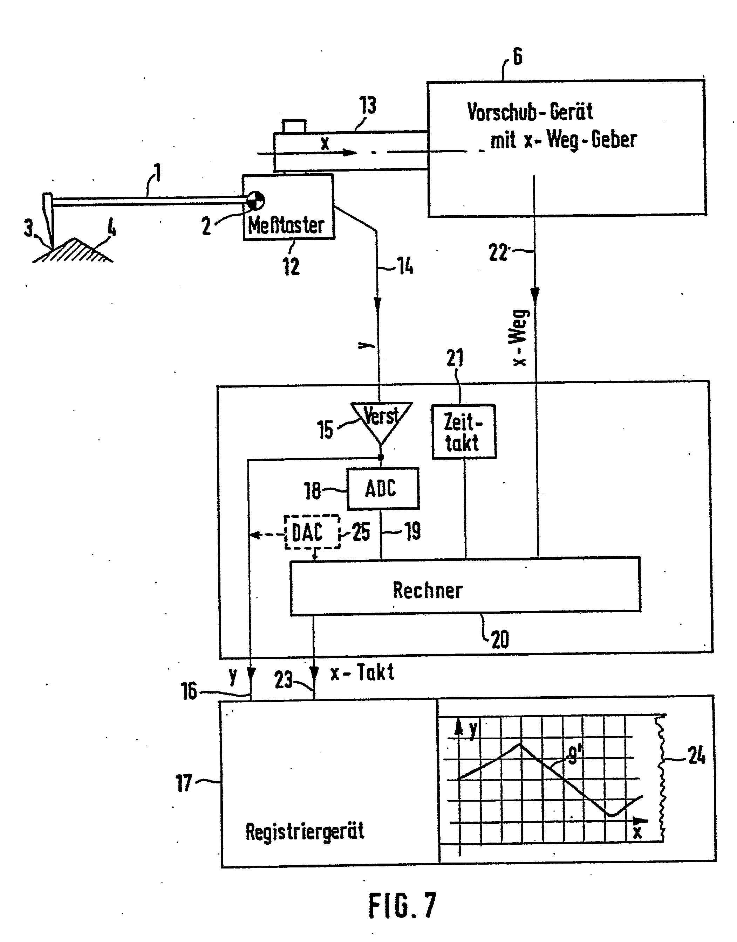

Der Abstand Δx zwischen den Punkten x1 und x2 aufgrund der Bewegung der Tastspitze aus der Lage 3 in die Lage 3' ist wesentlich größer und addiert sich zu dem Vorschubweg x. Aufgabe der Erfindung ist˘es, den Fehler Δx zu kompensieren. Dies geschieht durch die erfindungsgemäße Einrichtung, die weiter unten in Fig. 7 erläutert wird.

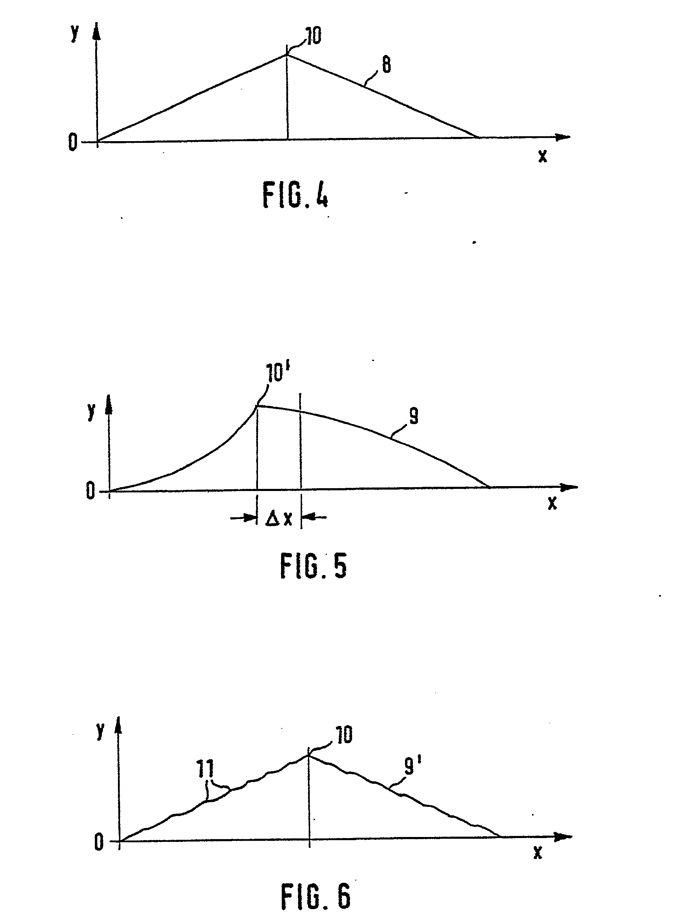

Fig. 4 zeigt in einer grafischen Darstellung in dem gleichen y-x-Koordinatensystem wie in Fig. 3 in anderem Maßstab eine durch ein Registriergerät aufgezeichnete Kurve 8 bei Abtastung der Oberflächenkontur 4 gemäß Fig. 1 ohne Fehler.

Fig. 5 zeigt in dem gleichen Koordinatensystem wie Fig. 4 eine Kurve 9, die aufgrund des oben genannten Fehlers Δx entsteht. Aus Fig. 3 war ersichtlich, daß aufgrund der Auslenkung die Tastspitze 3 in y-Richtung zu dem Ort 3' um den Betrag Δx voreilt. Diese Voreilung macht sich in Abhängigkeit von dem Auslenkwinkel α an allen Abtastpunkten bemerkbar. Besonders augenfällig ist dies bei Betrachtung einer Spitze 10 in Fig. 4, die aufgrund des Fehlers in Fig. 5 um den Betrag Δx verschoben ist.

Fig. 6 zeigt in gleicher Darstellung wie in den Fig. 4 und 5 die fehlerbehaftete Kurve 9 nach der Korrektur als Kurve 9'. Bei dieser Kurve 9' sind kleine Rippeln 11 erkennbar, die bei einer nicht analogen, sondern digitalen Kompensationsweise entstehen, in der Praxis jedoch so fein sind, daß sie nicht sichtbar sind.

In dem Blockschaltbild in Fig. 7 ist wieder die Oberflächenkontor gemäß Fig. 1 gezeigt, die - wie bereits erwähnt - zum Zwecke der Erläuterung als kleines Dach angenommen ist. Diese Oberflächenkontur wird durch die Tastspitze 3 abgetastet, die sich am Ende des Tastarmes 1 befindet, der in dem Drehlager 2 gelagert ist, das sich in einem Meßtaster 12 befindet. Der Meßtaster 12 ist an einer Stange 13 gehalten, die durch die Vorschubeinrichtung 6 mit dem Abtastvorgang bewegt wird.

Das elektrische Meßsignal des Meßtasters 12 gelangt über eine Leitung 14 in einen Verstärker 15 und von dessen Ausgang über eine Leitung 16 in ein Registriergerät 17.

Das verstärkte Meßsignal aus dem Verstärker 15 ist außerdem in einen Analog/Digitalwandler 18 eingespeist, so daß es als digitales Signal über eine Leitung 19 in einen digitalen Rechner 20 gelangt. Dieser Rechner erhält von einem Zeittaktgeber 21 einen Zeittakt oder alternativ in genauerer Form über Leitung 22 von der Vorschubeinrichtung 6 einen wegabhängigen Takt. Einer dieser frei ausgewählten Takte gelangt als x-Takt über eine Leitung 23 an das Registriergerät 17 und steuert dessen Vorschub für Registrierpapier 24, das schematisch dargestellt ist.

Der Rechner 20 berechnet in Abhängigkeit von dem über die Leitung 19 zugeführten Meßsignal jeweils den Wert Δx und verändert entsprechend den x-Takt für die Steuerung des Vorschubes für das Registrierpapier 24, das somit in Abhängigkeit von dem Wert Δx vor- oder nacheilt, so daß bei der Aufzeichnung der bei der Abtastung entstehende x-Fehler (Fig. 3) kompensiert wird. Auf dem Registrierpapier 24 entsteht somit die Kurve 9′ gemäß Fig. 6.

Es ist natürlich ohne jede Schwierigkeit möglich, in dem Rechner 20 auch die geringfügigen Fehler in y-Richtung zu berechnen und so die y-Werte zu korrigieren. In diesem Falle werden die vom Rechner 20 errechneten, korrigierten y-Werte über einen gestrichelt eingezeichneten Digital/ Analogwandler 25 dem Registriergerät 17 über Leitung 16 zugeführt, die dann von dem Verstärker 15 getrennt ist.

Statt des Vorschubes des Registriergerätes 17 kann auch der Vorschub des Vorschubgerätes 6 durch den Rechner 20 gesteuert werden, um die Abtastfehler zu kompensieren.

## Patentansprüche

1. Einrichtung zur Messung der Gestalt einer Oberfläche entlang einer Abtastlinie, mit einem mechanisch/elektrischen Wandler, der einen Tastarm aufweist, an dessen freiem Ende sich eine Tastspitze befindet und dessen anderes Ende über ein Drehlager, dessen Drehachse parallel zur abzutastenden Oberfläche und senkrecht zur Abtastlinie verläuft, mit einer Vorschubeinrichtung verbunden ist, die das Drehlager entlang der Abtastlinie bewegt, wobei der Wandler ein von den Auslenkungen der Tastspitze quer zur Abtastlinie abhängiges, elektrisches Meßsignal abgibt, das in eine Registriereinrichtung eingespeist ist, die weg- oder zeitabhängig das elektrische Signal aufzeichnet, **gekennzeichnet durch** eine Steuereinrichtung, in die das elektrische Meßsignal eingespeist ist und die in Abhängigkeit von der Größe des elektrischen Meßsignals dem Vorschub der Registriereinrichtung oder der Vorschubeinrichtung (6) eine Vor- oder Rückwärtsbewegung so überlagert, daß die durch das Auslenken des Tastarmes um die Drehachse hervorgerufene Bewegungskomponente der Tastspitze in Vorschubrichtung kompensiert wird.

2. Einrichtung nach Anspruch 1, **dadurch gekennzeichnet**, daß die Steuereinrichtung zur Erzeugung der Vor- oder Rückwärtsbewegung die Geschwindigkeit des Vorschubes der Registriereinrichtung oder der Vorschubeinrichtung (6) zeitweise erhöht bzw. verringert.

3. Einrichtung nach Anspruch 1, **dadurch gekennzeichnet**, daß die Vorschubeinrichtung einen mit konstanter Geschwindigkeit antreibenden Vorschubmotor aufweist, der in Vorschubrichtung hin- und herbeweglich geführt und mit einer Verstelleinrichtung gekoppelt ist, die an die Steuereinrichtung angeschlossen ist und den Vorschubmotor zur Herbeiführung der Vor- oder Rückwärtsbewegung hin- oder herbewegt.

## Claims

1. A device for measuring the shape of a surface along a sensing-line having a mechanical/electrical converter which exhibits a probe arm at the free end of which there is a probe-tip and the other end of which via a pivot bearing the axis of rotation of which runs in parallel with the surface to be sensed and perpendicular to the sensing-line is connected to a feed mechanism which moves the pivot bearing along the sensing-line, whilst the converter emits an electrical measuring signal which is dependent upon the deflections of the probe-tip transversely to the sensing-line and is stored in a recorder which records the electrical signal in dependence upon distance or time, characterized by a control device into which the electrical measuring signal is fed and which in dependence upon the value of the electrical measuring signal superimposes upon the feed of the recorder or feed mechanism (6) a motion forwards or backwards such that the component of the motion of the probe-tip in the direction of feed is compensated, which is caused by the deflection of the probe-arm about the axis of rotation.

2. A device as in Claim 1, characterized in that the control device for generating the motion forwards or backwards raises or lowers the speed of feed of the recorder or feed mechanism (6) from time to time.

3. A device as in Claim 1, characterized in that the feed mechanism exhibits a feed motor which is driven at constant speed and guided to be able to move to and fro in the direction of feed and coupled to an adjusting mechanism which is connected to the control device and moves the feed motor to and fro for bringing about the motion forwards or backwards.

## Revendications

1. Dispositif de mesure de la forme d'une surface le long d'une ligne de palpation, avec un convertisseur mécanique/électrique qui présente un bras palpeur à l'extrémité libre duquel se trouve une pointe de palpation et dont l'autre extrémité est reliée, par l'intermédiaire d'un coussinet de pivotement dont l'axe de pivotements s'étend parallèlement à la surface à palper et orthogonalement à la ligne de palpation, à un dispositif d'avance qui déplace le coussinet de pivotement le long de la ligne de palpation, le convertisseur émettant un signal de mesure électrique dépendant des excursions de la pointe de palpation obliquement par rapport à la ligne de palpation, lequel signal est mémorisé dans un dispositif d'enregistrement qui enregistre le signal électrique en dépendance de la trajectoire ou du temps, caractérisé par un dispositif de commande dans lequel est mémorisé le signal de mesure électrique et qui superpose un déplacement vers l'avant ou vers l'arrière, en fonction de la valeur du signal de mesure électrique, à l'avance du dispositif d'enregistrement ou du dispositif d'avance (6), de manière à compenser la composante de déplacement de la pointe de palpation en direction d'avance engendrée par l'excursion du bras de palpation autour de l'axe de pivotement.

2. Dispositif selon la revendication 1, caractérisé en ce que le dispositif de commande, pour engendrer le déplacement vers l'avant ou vers l'arrière, augmente ou diminue temporairement la vitesse de l'avance du dispositif d'enregistrement ou du dispositif d'avance (6).

3. Dispositif selon la revendication 1, caractérisé en ce que le dispositif d'avance présente un moteur d'avance à vitesse constante qui est guidé en direction d'avance en mouvement de va-et-vient et est accouplé à un dispositif de réglage qui est raccordé au dispositif de commande et déplace le moteur d'avance en va-et-vient pour produire le déplacement vers l'avant ou vers l'arrière.

FIG. 1

FIG. 2

FIG. 3

FIG. 4

FIG. 5

FIG. 6

FIG. 7